# EUROPEAN PATENT SPECIFICATION

(11) **EP 3 258 098 B1**
(45) Date of publication and mention of the grant of the patent: **18.12.2019**
(21) Application number: 16749376.6
(22) Date of filing: 29.01.2016
(51) Int. Cl.: F03B 17/06, F03B 3/12, F03B 15/04, F03B 3/06, F03B 3/08, F03B 3/18, F03B 13/10, F03B 15/06

(54) **HYDROELECTRIC POWER GENERATOR FOR RIVER**
WASSERKRAFTGENERATOR FÜR FLUSS
GÉNÉRATEUR HYDROÉLECTRIQUE POUR RIVIÈRE

(30) Priority: 09.02.2015 KR 20150019468
(43) Date of publication of application: 20.12.2017
(73) Proprietor: Oh, Taekgeun, Seo-gu, Daejeon 35212 (KR)
(72) Inventor: Oh, Taekgeun, Seo-gu, Daejeon 35212 (KR)
(74) Representative: Samson & Partner Patentanwälte mbB
(86) International application number: PCT/KR2016/000970
(87) International publication number: WO 2016/129836

(56) References cited:
- WO-A1-2005/035977
- DE-A1-102011 055 783
- JP-A- 2003 307 173
- KR-A- 20020 066 908
- KR-A- 20060 035 710
- KR-A- 20110 068 118
- KR-A- 20110 068 118
- KR-B1- 101 127 565
- KR-B1- 101 418 011
- US-B1- 8 354 758

## Description

### Technical Field

The present invention relates to a hydroelectric power generator for a river and, more particularly, to a hydroelectric power generator for a river, wherein the hydroelectric power generator installed in a river or in water stored by a dam can generate power using a turbine rotating to induce water into a turbine system, can produce eco-friendly energy by controlling the amount of water flowing inside, can be installed at various places including a place with a small head drop, and can be configured in various sizes.

### Background Art

As the types of power generation, generally, there are thermal power generation, nuclear power generation, hydroelectric power generation, solar power generation, wind power generation, tidal power generation, etc. That is, thermal power generation and nuclear power generation generate electricity by rotating a turbine in a power generator using vapor produced by heat, and hydroelectric power generation generates electricity by rotating a turbine using a head drop of water stored by a dam.

However, thermal power generation uses fossil fuel such as coal or oil as an energy source. The construction expense of a power plant is relative low, but the reserves of fossil fuel are limited, so there is a problem of exhaustion of the energy source and environmental contamination.

Nuclear power generation, which uses a large amount of heat that is produced by nuclear fission of a radioactive material such as uranium, can generate a large amount of electricity, but causes severe environmental contamination due to radioactivity.

Accordingly, there has been much research on hydroelectric power generation that can generate electricity without environmental contamination, and on actual systems for the hydroelectric power generation.

However, hydroelectric power generation systems use a topology having a high head drop, so geometrical environments were used or huge structures were required to obtain a high head drop from a dam.

Due to the structural barrier of providing a large head drop, the ecological connection is necessarily broken between the upstream side and the downstream side of a power plant. Further, existing hydroelectric power plants are usually constructed among the mountains with slopes that are far from cities where most users dwell, so large costs are required to construct facilities for transmission electricity.

Accordingly, a technology that can be used for a low head drop and a low flow speed has been disclosed in Korean Patent Application Publication No. 10-2010-0104694 (published on September 20, 2010), in which a rotary unit that is rotated at a low head drop and a low flow speed of water is disposed between support members installed on the ground to generate electricity, so power generation may be performed with high efficiency, but the installation place is limited to the ground, so usability is low.

Meanwhile, various floating hydroelectric power generators that are available for a low head drop and a low flow speed have been proposed, but the actual use is limited due to the following problems.

Korean Utility Model No. 20-0329785 (registered on October 1, 2003) has proposed a configuration that mounts a plurality of water turbines on a floating structure and generates electricity with the water turbines submerged in water by a half or less, but the efficiency of the water turbines is necessarily lower than a floating facility, so it is inefficient.

Korean Utility Model No. 20-0415733 (registered on May 1, 2006) has proposed a configuration that installs floats at both sides on water and installs a water turbine between the floats to generate electricity, so the costs for the facility is relatively low and high-efficiency power generation is expected, but the configuration for fixing the floats and structurally combining the floats with the water turbine is not proposed in detail in terms of structural stability and practical use, so there are many unstable factors.

Korean Utility Model No. 20-0415748 (registered on May 1, 2006) has proposed a configuration that installs a water turbine on a structure floating on water such as a barge and generates electricity using the torque produced by the portion of the water turbine under the water, so the floating barge looks stable, but it is difficult to fix the barge and this configuration is inappropriate to a place keeping a small amount of water.

As described above, hydroelectric power generation systems using water turbines mounted on a floating structure may be considered as being somewhat insufficient in terms of actual use and efficiency including the costs for constructing the floating facility, and a loss of power due to the floats.

Recently, many hydroelectric and tidal power generation facilities have been developed to solve this problem. It may be considered that many hydroelectric power generation facilities using a head drop provided by an artificial reservoir to save costs of energy for generating electricity have been constructed for this reason.

In particular, since rivers on a gentle slope flow slow, it is so difficult at present to generate electricity using the rivers, and those power generation facilities have low efficiency. Accordingly, there are few power generation facilities of this type.

Accordingly, it is required to research and develop a hydroelectric power generation system that can appropriately deal with various environmental changes using a slowly flowing river and the width of the river at an area with a relatively small head drop.

The term 'river' used herein includes all of water flows such as a natural watercourse that are very narrow or relatively wide, and an artificial watercourse.

DE 10 2011 055783 A1 relates to a hydroelectric power plant for producing power from water in e.g. river. The plant has blades arranged at a cylinder jacket of a turbine rotating cylinder and extended parallel to a turbine rotational axis. The blades rotate transverse to the axis. The blades are radially turned away from the jacket in an exposed position. The blades are moved on a side of the cylinder in a flow direction of the water in the exposed position and do not produce water resistance on another side of the cylinder in an adjusted position during continuous rotation of the cylinder from the exposed position to the adjusted position. The blades are made of plastic and/or fiber reinforced plastic.

### [Prior Art Document]

(Patent Document 1) Document 1. Korean Patent Application Publication No. 10-2010-0104694 (2010.09.20.)
(Patent Document 2) Document 2. Korean Utility Model No. 20-0329785 (2003.10.01.)
(Patent Document 3) Document 3. Korean Utility Model No. 20-0415733 (2006.05.01.)
(Patent Document 4) Document 4. Korean Utility Model No. 20-0415748 (2006.05.01.)

### Disclosure

### Technical Problem

Accordingly, an object of the present invention is to provide a hydroelectric power generator that uses eco-friendly energy by installing and turning a water turbine in a river having a relatively small head drop.

Another object of the present invention is to construct a hydroelectric power generator in various numbers or widths on a river bottom or at a predetermined height from a river bottom.

Another object of the present invention is to achieve efficient power generation by supplying a necessary amount of water for power generation by controlling the flow speed and amount of water.

Another object of the present invention is to achieve high-efficiency power generation by maximizing rotational energy by increasing an angular speed by adjusting a flow speed and pressure applied to a turbine and blades by adjusting the amount of water.

Another object of the present invention is to achieve high-efficiency power generation by making flow and rotation of a turbine and blades in the same direction.

Another object of the present invention is to achieve high-efficiency power generation by increasing an angular speed at the same flow speed by adjusting the number and radius of blades of a turbine.

Another object of the present invention is to achieve high-efficiency power generation by generating torque corresponding to the number of blades from a rotary shaft by generating the same pressure on the blades by generating a water head with a predetermined gap between ends of blades and a power generation guide.

### Technical Solution

A hydroelectric power generator for a river of the present invention includes: height adjusters disposed at a predetermined distance from each other on a concrete base; a lower flow guide unit disposed between side guides of which a front and rear thereof are connected to the height adjusters, and having a blade guide at front end of a flow guide; a turbine disposed on a turbine shaft over the lower flow guide unit and having blade seats on an outer side thereof; blades disposed on fixed shafts passing through the turbine in the blade seats and deployed by a stream to rotate the turbine; and an upper flow guide unit disposed between the side guides connected to the height adjuster over the lower flow guide unit and having a power generation guide along which the blades on the outer side of the turbine are deployed and moved.

The power generation guide is formed to have a predetermined gap from the outer side of the turbine, and velocity heads are made by a gap between ends of the blades and the power generation guide when the blades are deployed and rotated, and the same pressure is applied to the blades and torque corresponding to the number of the blades is applied to the turbine, and water and the blades move in the same direction to generate electricity by rotating the turbine.

### Advantageous Effects

According to the present invention, the hydroelectric power generator is installed in a river with a relative small head drop such that a turbine is rotated in the river by a stream, so it is possible to use eco-friendly energy.

Further, the hydroelectric power generator can be installed on a river bottom or at a predetermined height from a river bottom and can be installed in various numbers and widths, depending on the width of a river, so high-efficiency power generation can be achieved.

Further, it is possible to supply a necessary amount of water for power generation by controlling the flow speed and amount of water through the control gate and it is also possible to increase strength for resisting load applied to the blades, which are reclined or deployed by water on the rotating turbine, and to efficiently generate power.

Further, it is possible to maximize rotational energy by increasing the angular speed of the turbine by controlling the pressure of water applied to the turbine and the blades by controlling the amount of water by controlling the angle of the control gate, whereby high-efficiency power generation is possible.

Further, since the flow direction of a river and the movement directions of the turbine and the blades are the same in the water, it is possible to generate power with high efficiency.

Further, it is possible to generate power with high efficiency by increasing the angular speed at the same flow speed by controlling the numbers and radius of the blades of the turbine.

Further, since velocity heads are made by the gap between the ends of the blades and the power generation guide, so the same pressure is applied to the blades and torque corresponding to the number of the blades is applied to the rotary shaft of the turbine, high-efficiency power generation is achieved.

### Description of Drawings

FIG. 1 is a perspective view showing installation of an embodiment of the present invention.
FIG. 2 is a front view when the present invention is installed.
FIG. 3 is a plan view when the present invention is installed.
FIG. 4 is a side view when the present invention is installed.
FIG. 5 is an enlarged cross-sectional view showing main parts of the present invention.
FIG. 6 is a front view of a turbine without a blade of the present invention.
FIG. 7 is an enlarged front view when blades of the present invention are reclined.
FIG. 8 is an enlarged front view when blades of the present invention are deployed.
FIG. 9 is a side cross-sectional view when a turbine and blades of the present invention are combined.
FIG. 10 is a perspective view when a turbine and blades of the present invention are combined.
FIG. 11 is a front view when the present invention is installed on a river bottom.

### Best Mode

Exemplary embodiments of the present invention are described hereafter in detail with reference to the accompanying drawings.

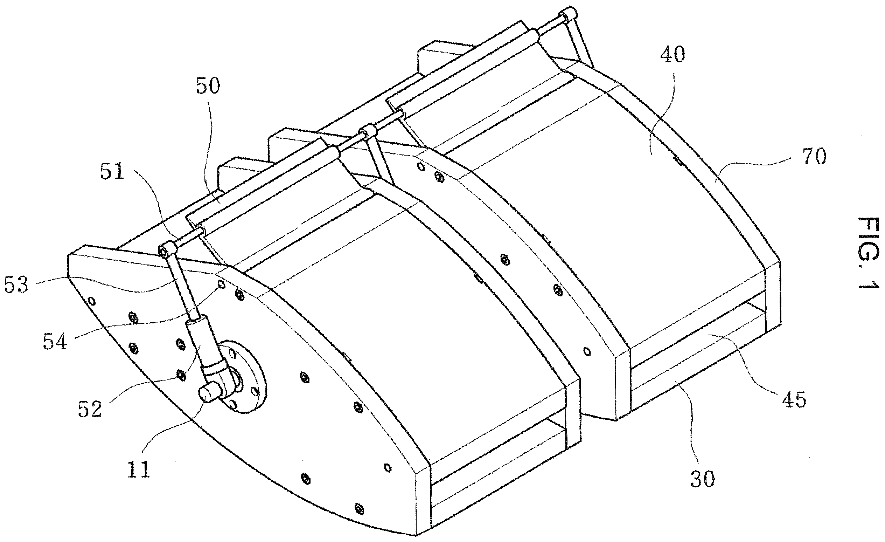

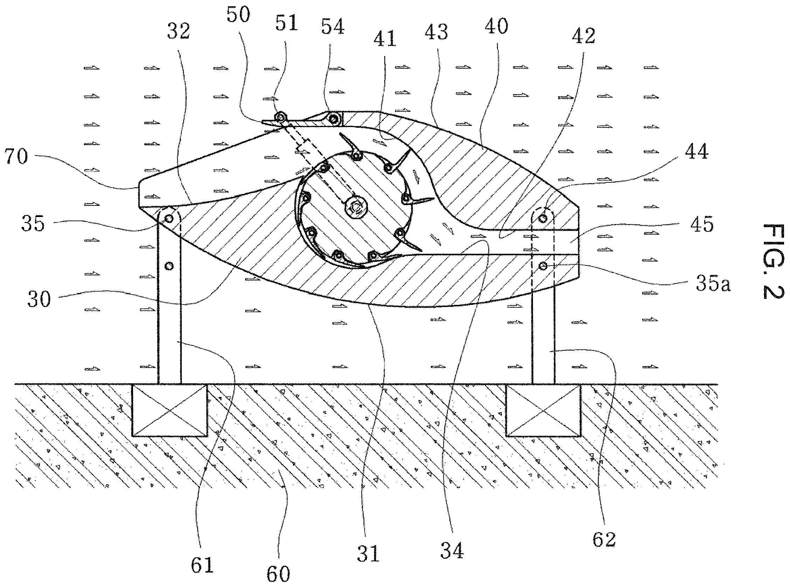

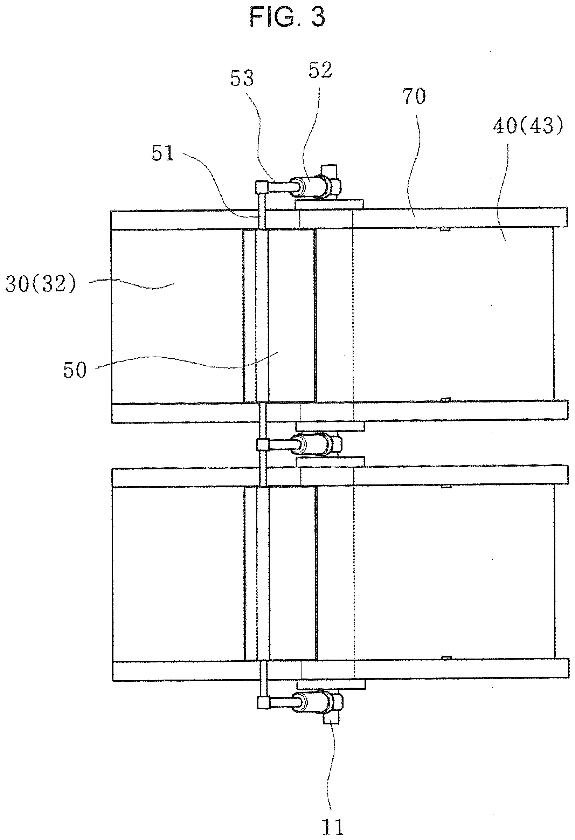

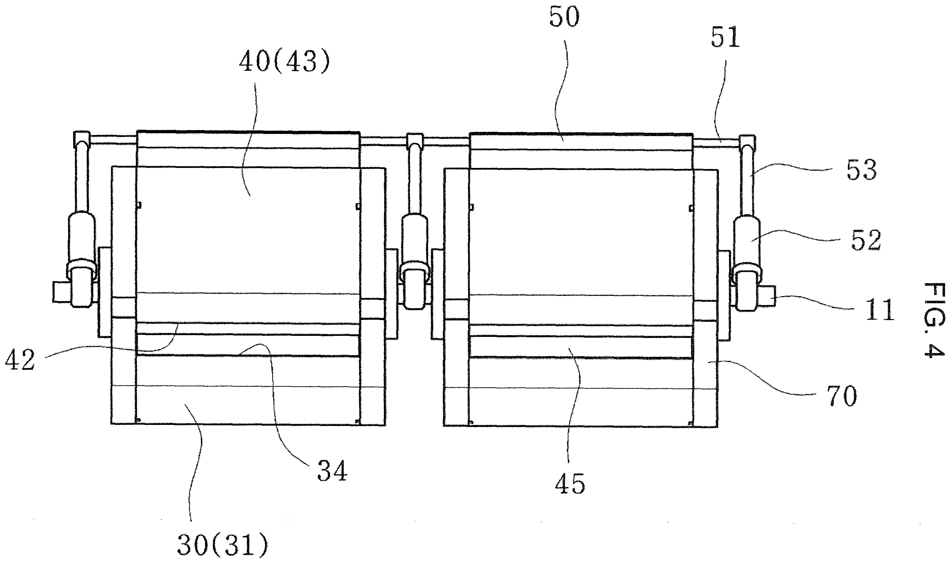

FIG. 1 is a perspective view showing installation of an embodiment of the present invention, FIG. 2 is a front view when the present invention is installed, FIG. 3 is a plan view when the present invention is installed, and FIG. 4 is a side view when the present invention is installed.

A concrete base 60 having predetermined width, height, and length is installed on a river bottom, height adjusters 61 and 62 are installed at a predetermine distance on the concrete base 60, and side guides 70 are coupled to both sides to maintain a predetermined height on the height adjusters 61 and 62 from the river bottom.

A lower flow guide unit 30 and an upper flow guide unit 40 are disposed between the side guides 70.

A turbine 10 having a plurality of blades 20, which is formed with regular intervals on the outer side of the turbine 10 and is naturally reclined or deployed by water when rotating, is disposed on the center portion of the top of the lower flow guide 30 to be rotated on a turbine shaft 11.

The upper flow guide unit 40 for guiding water flow is mounted on the height adjuster 62.

A control gate 50 that controls the amount and speed of water flowing into the turbine 10 is disposed at the front of the upper flow guide unit 40.

The front of the lower flow guide unit 30 is connected to the height adjuster 61 by using a lower connection shaft 35 and the rear of the lower flow guide unit 30 is connected to the height adjuster 62 by using a lower connection shaft 35a so that the height from the concrete base 60 can be adjusted.

The lower flow guide unit 30 has a lower guide 31 having a streamlined bottom so that water can normally flow under it, and a flow guide 32 at the front portion on the top. Further, an arc-shaped blade guide 33 is formed at the right side of the flow guide 32 so that the blades 20 are reclined when the turbine 10 is rotated, and a lower drainage 34 formed horizontally or formed wider as it goes to the outlet is formed so that a drain space 45 is formed at the right side of the blade guide 33.

The drain space 45 is the same as or wider than the gap between the turbine 10 and a power generation guide 41 to make the speed and pressure of water that is discharged the same as or larger than the external flow speed and pressure so that water can be easily discharged.

The upper flow guide unit 40 has the control gate 50 coupled to the front through a gate rotary shaft 54 and a power generation guide 41 guiding water under it to rotate the blades 20. The upper drainage 42 is horizontally formed such that the drain space 45 is formed at the right side of the power generation guide 41 and a streamlined upper guide 43 is formed at the right side of the control gate 50 so that water normally flows.

The power generation guide 41 maintains the same gap from the position where the blades 20 are deployed to the position where water is discharged, a gap is defined from ends of the blades 20 to the power generation guide 41, and at least two to five blades 20 are positioned at the power generation guide 41 to obtain high efficiency.

The lower drainage 34 and the upper drainage 42 are formed relatively long so that the flow speed and pressure of water discharged into the drain space 45 are the same as or larger than the flow speed or pressure of water at the outside to easily discharge water to the outside.

Gate control cylinders 52 each having a cylinder shaft 53 connected to a gate shaft 51 coupled to the control gate 50 are connected to the turbine shaft 11 so that the amount of water that is supplied to the turbine 10 can be controlled by controlling the opening/closing angle of the control gate 50.

A decelerator or a power generation unit is connected to the turbine shaft 11 to generate power using torque from the turbine 10.

A plurality of turbines 10, lower flow guide units 30, and upper flow guide units 40 may be installed, depending on the width of a river, may be sequentially installed, depending on the direction of a river, or may be submerged in the water.

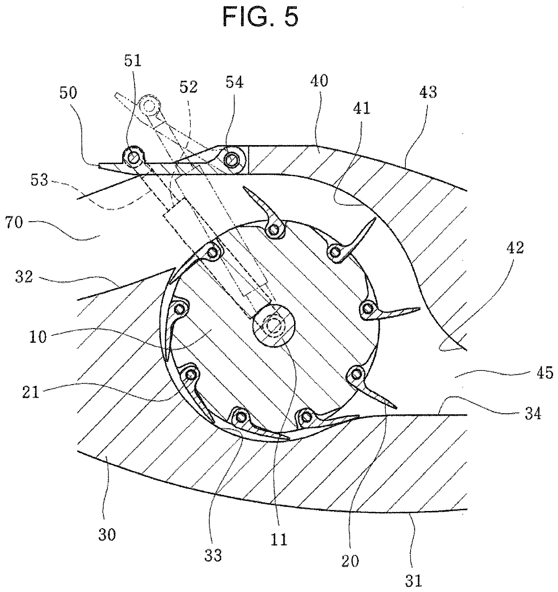

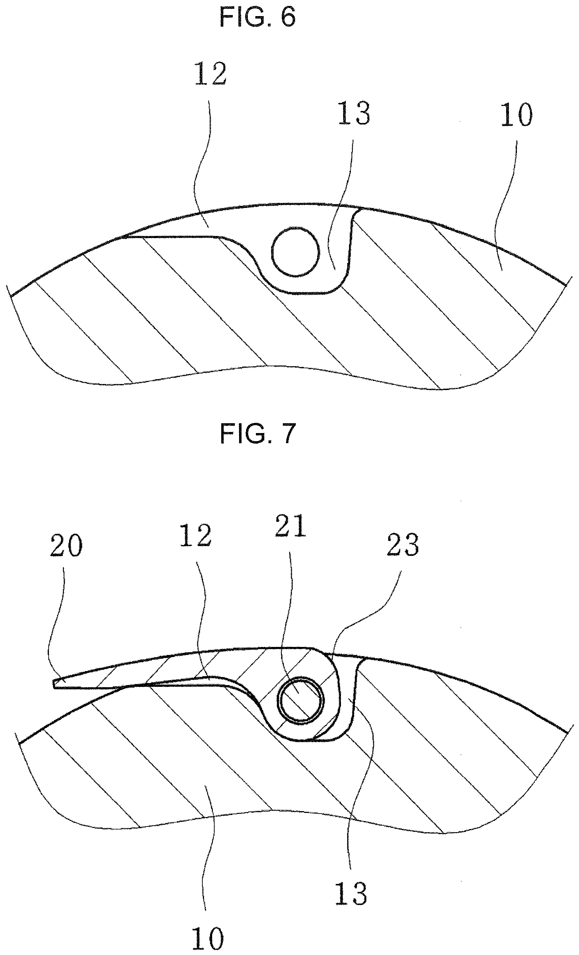

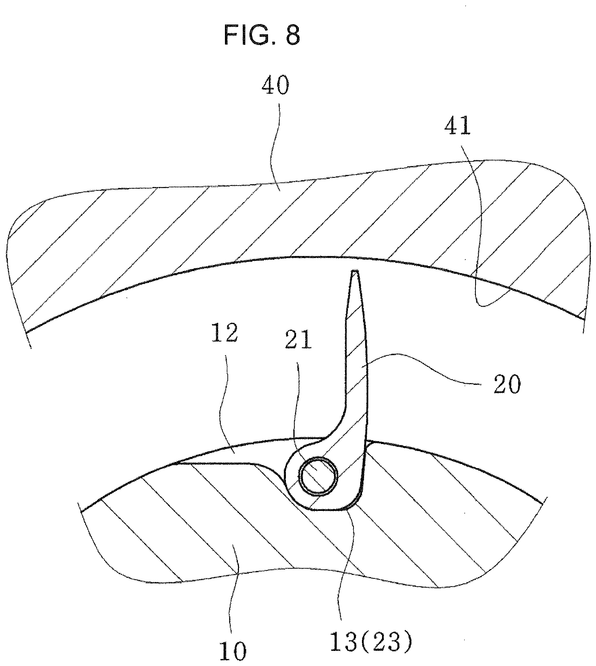

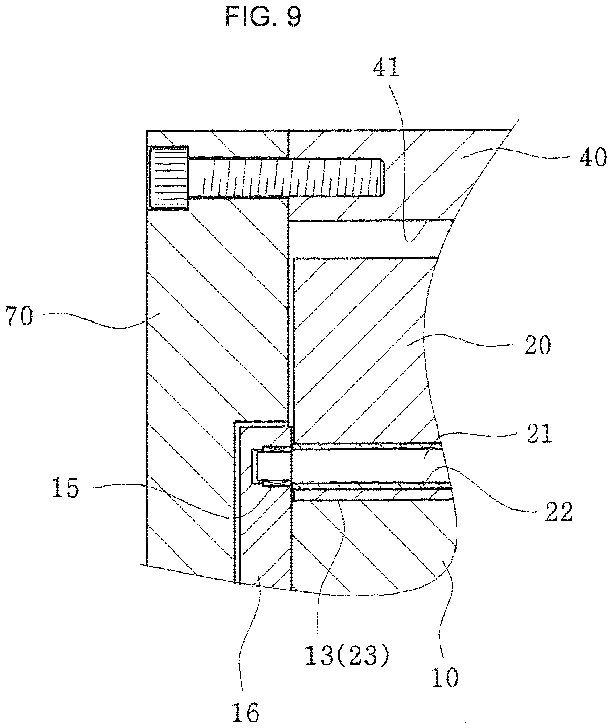

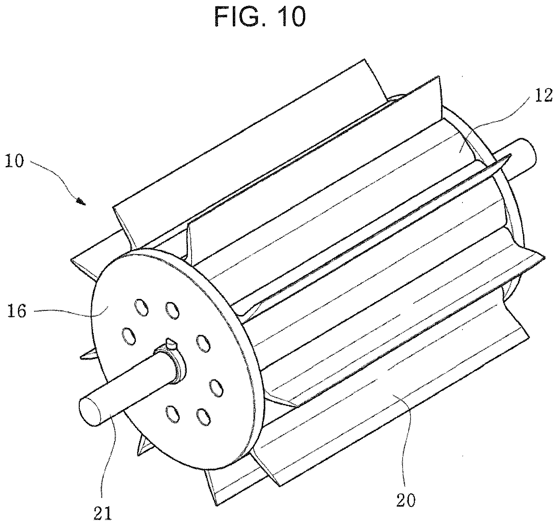

FIG. 5 is an enlarged cross-sectional view showing main parts of the present invention, FIG. 6 is a front view of a turbine without a blade of the present invention, FIG. 7 is an enlarged front view when blades of the present invention are reclined, FIG. 8 is an enlarged front view when blades of the present invention are deployed, FIG. 9 is a side cross-sectional view when a turbine and blades of the present invention are combined, and FIG. 10 is a perspective view when a turbine and blades of the present invention are combined.

The turbine 10 has a circular shape and has blade seats 12 allowing the blades 20 arranged with regular intervals to be reclined at a predetermined angle without interference. Further, an L-shaped reinforcing groove 13 rounded at the corner is formed at a side in each of the blade seats 12.

A fixing shaft 21 is disposed through the reinforcing grooves 13 on the turbine 10 to rotatably couple the blades 20.

The fixed shaft 21 is coupled to turbine covers 16 at both sides of the turbine 10 through a fixed bushing 15 and a movable bushing 22 is fitted on the fixed shaft 21 so that the blade 20 can rotate. The reinforcing groove 13 fits to the rear and bottom of a reinforcing portion 23 when the blade 20 is erected.

The fixed bushing 15 and movable bushing 22 are appropriate for small sizes and bearings may be fitted on the fixed shaft 21 instead of the fixed bushing 15 and the movable bushing 22.

A gap between the blade guide 33 and the turbine 10 is formed narrow so that the blades 20 are rotated in a reclined position, while a gap between the power generation guide 41 and the turbine 10 is formed wide so that the blades 20 are deployed and rotated by water flowing to the turbine 10.

The blade 20 vertically extends from the reinforcing portion 23 and is then curved upward at the end. Further, the blade 20 is rounded at the reinforcing portion 23, extends to fit to the blade seat 12, and is inclined downward at the front end of the blade seat 12. Further, the outer portion of the front end of the blade 20 partially protrudes out of the blade seat 12 when it is reclined to be turned and deployed by water or reclined inside the blade guide 33.

The width, height, and size of the blades 20 may vary, depending on the flow speed of a river, the flow speed at the position where they are installed, and the amount of power generation.

The power generation guide 41 maintains the same gap from the position where the blades 20 are deployed and the position where water is discharged, and a gap is defined between the front ends of the blades 20 to the power generation guide 41 to make a velocity head so that the same pressure is applied to the blades 20.

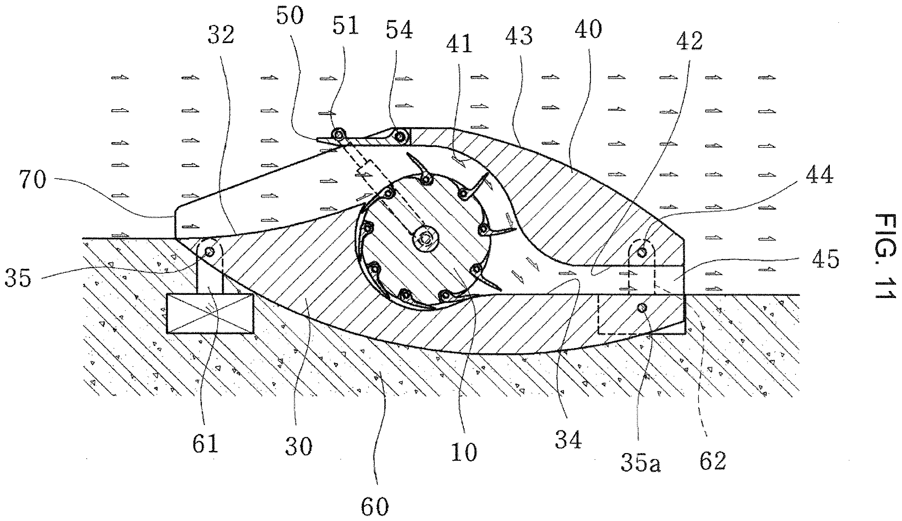

FIG. 11 is a front view when the present invention is installed on a river bottom. The lower flow guide unit 30 is fixed to a river bottom with the lower guide 31 in contact with the concrete base 60 and coupled to the height guides 61 and 62 by using the lower connection shafts 35 and 35a so that the height can be adjusted and the water pressure on the river bottom can be used. However, the other configuration for generating electricity is the same as that shown in FIGs. 1 to 9.

According to the hydroelectric power generator for a river that has this configuration, the concrete base 60 is installed on a river bottom, the height adjusters 61 and 62 are installed at a predetermined distance from each other, the lower flow guide unit 30 disposed between the side guides 70 is coupled to the lower connection shafts 35 and 35a, the turbine 10 is rotatably disposed on the turbine shaft 11 over the blade guide 33 of the lower flow guide unit 30, and the upper flow guide unit 40 disposed between the side guides 70 is coupled to the height adjuster 62 by using the upper connection shaft 44.

The lower flow guide unit 30 and the upper flow guide unit 40 may be installed at various heights, depending on the conditions of a river and a plurality of the guide units may be sequentially installed in series, depending on the width of a river. Further, the installed position may be changed, depending on the circumstances of the site.

When the hydroelectric power generator for a river of the present invention is installed, various flow speeds are produced in accordance with the depth and width of the water and the slope of the ground. If necessary, it may be possible to construct a dam and install as many hydroelectric power generators as needed to obtain a necessary width and number for various positions at the ends of the dam or behind the dam. Further, when power generation efficiency is expected by a stream, the generator may be sequentially installed. Accordingly, it is possible to obtain hydroelectric power generation using eco-friendly energy by a low head drop from a river.

According to the present invention, when the power generator is installed in a river, water is guided to the front and top of the turbine 10 along the streamlined shape of the flow guide 32 of the lower flow guide unit 30 and the amount of the water that is supplied to the turbine 10 is controlled by controlling the control gate 50 at the front of the upper flow guide unit 40.

Since the amount of water needed for power generation is supplied by controlling the amount and speed of water by controlling the angle of the control gate 50, high-efficiency power generation can be achieved.

When water is supplied to the front top of the turbine 10 through the flow guide 32 and the control gate 50, the blades 20 reclined in the blade seats 12 with the front ends partially exposed on the outer side of the turbine 10 is deployed by the water.

Since the blades 20 are installed in the blade seats 12 by the fixed shafts 21 and can be rotated by the bushings 22, they are deployed inside the power generation guide 41 by the water and force that moves the blades 20 is generated by a stream, thereby providing torque for continuously rotating the turbine 10.

When the blades 20 are erected in the blade seats 12, the reinforcing portions 23 and the reinforcing grooves 13 fit to each other at the rounded corners of the L-shape, so the reinforcing portions 23 fit to the rear and bottom of the reinforcing grooves 13. Accordingly, torque can be stably provided even though load is applied to the blades 20 by the water, whereby a reinforcing effect can be achieved.

That is, the width and height of the blades 20 can be varied and can be rotatably installed on the fixed shafts 21 by the bushings 22 on the outer side of the turbine 10. When the blades 20 have a large wide, uniform load is applied to the large widths of the reinforcing portions 23 and the reinforcing grooves 13, so power generation can be performed without heavy load to the blades 20 and the turbine 10.

In detail, it is possible to control the speed and pressure of water applied to the blades 20 by controlling the amount of the water by controlling the angle of the control gate 50, so it is possible to achieve high-efficiency power generation by maximizing rotational energy by increasing the angular speed of the turbine 10.

The blades 20 and the turbine 10 show different efficiencies, depending on their materials, but they may be made of relatively light and strong metal.

The blades 20 are deployed by a stream and provide force for rotating the turbine 10 while passing through the arc-shaped power generation guide 41, and are partially blocked and naturally reclined into the blade seats 12 when they reach the blade guide 33 after passing the power generation guide 41. Further, the blades 20 reclined in the blade seats 12 pass the blade guide 33 and rotate with the turbine 10 without a loss of power.

In particular, the stream and the blades 20 rotate the turbine 10 by moving in the same direction, so high-efficiency power generation is possible.

Further, it is possible to increase the efficiency of power generation by increasing the angular speed at the same flow speed by adjusting the number and radius of the blades 20 on the turbine 10.

Further, a velocity head is generated by a predetermined gap between the front ends of the blades 20 and the power generation guide 41, so the same pressure is applied to the blades 20 by water inside the power generation guide 41. Further, when the blades 20 are deployed at the power generation guide 41 and two to five blades are rotated, torque corresponding to the number of the deployed blades 20 is applied to the turbine shaft 11, whereby high-frequency power generation is achieved.

The velocity head is described in detail. The power generation guide 41 has a predetermined gap from the outer side of the turbine 10 and maintains a predetermined gap from the front ends of the blades 20 when the blades 20 are deployed and rotated, thereby generating a velocity head, applying torque to the turbine 10, and applying the same flow rate and pressure to the blades 20 inside the power generation guide 41. Accordingly, when three blades 20 are deployed inside the power generation guide 41 by the flow rate applied to one blade 20, three-time larger torque is provided, as compared with the related art, thereby achieving high-efficiency power generation.

The water that has passed the power generation guide 41 passes through the drain space 45 between the lower drainage 34 and the upper drainage 42 and then flows out of the power generator. Further, the lower drainage 34 and the upper drainage 42 are formed relatively long so that water passing the blades 20 can flow straight after the stream is curved, and the flow speed and pressure of the water flowing outside through the drain space 45 are the same as or larger than those at the outside, whereby the water can easily flow outside.

The height of the drain space 45 can be adjusted in accordance with the installed positions of the lower flow guide unit 30 and the upper flow guide unit 40, so the turbine 10 submerged in water can use the largest flow speed and pressure of the water, whereby efficiency can be improved.

The lower flow guide unit 30 guides water so that the water can be normally supplied to the turbine 10 through the flow guide 32, and the lower guide 31 allows the water flowing over the concrete base 60 to normally flow without influence on the flow speed.

The upper flow guide unit 40 guides water so that the water can normally flow without influence on the flow speed of water flowing over it with the upper guide 43 submerged in the water, and the control gate 50 controls the amount and speed of the water supplied to the turbine 10.

When the gate control cylinders 52 coupled to the turbine shaft 11 are operated and move forward and backward the cylinder shafts 53, the gate shaft 51 of the control gate 50 is rotated, so the rotational angle of the control gate 50 about the gate rotary shaft 54 is controlled. When the control gate 50 is rotated upward, more water flows inside, and when the control gate 50 is rotated downward, less water flows inside. Accordingly, since the amount and flow speed of water flowing inside are controlled in this way, it is possible to generate power with the optimal efficiency of the turbine 10 by controlling the amount and flow speed of water.

A gear can be disposed at an end of the turbine shaft 11 to supply the generated power to a desired place or a power generation system may be connected to the end to transmit power to a desired place after the power is generated.

Further, as shown in FIG. 10, when the power generation units are installed on the concrete base 60, power is generated using the stream flowing on the river bottom. Further, the height of the top of the concrete base 60 and the height of the front of the flow guide 32 are made the same so that a stream directly flows to the turbine 10. Further, since it is possible to control the amount of water flowing to the turbine 10 by controlling the inclination angle of the control gate 50 at the front of the upper flow guide unit 40 by controlling the cylinder shafts 53 of the gate control cylinders 52, it is possible to achieve high-efficiency power generation by providing optimal flow speed and pressure for power generation by increasing flow speed and pressure of water by increasing the inflow amount of the water, when the flow speed is low.

The present invention is not limited to the exemplary embodiments described above and may be modified in various ways by those skilled in the art, and the modifications should be construed as being included in the similar range defined by patent laws.

### Industrial Applicability

The present invention provides a very useful power generator that can efficiently generate electricity using eco-friendly energy by installing the power generator not to be influenced by the width and depth of a river and then installing a turbine for generating electricity using water of which the supply amount is controlled by a control gate.

## Claims

1. A hydroelectric power generator for a river, comprising:
height adjusters (61, 62) disposed at a predetermined distance from each other on a concrete base (60);
a lower flow guide unit (30) disposed between side guides (70) of which a front and rear thereof are connected to the height adjusters (61, 62), and having a blade guide (33) at front end of a flow guide (32);
a turbine (10) disposed on a turbine shaft (11) over the lower flow guide unit (30) and having blade seats (12) on an outer side thereof;
blades (20) disposed on fixed shafts (21) passing through the turbine (10) in the blade seats (12) and deployed by a stream to rotate the turbine (10); and
an upper flow guide unit (40) disposed between the side guides (70) connected to the height adjuster (62) over the lower flow guide unit (30) and having a power generation guide (41) along which the blades (20) on the outer side of the turbine (10) are deployed and moved,
wherein the power generation guide (41) is formed to have a predetermined gap from the outer side of the turbine (10), and velocity heads are made by a gap between ends of the blades (20) and the power generation guide (41) when the blades (20) are deployed and rotated, and the same pressure is applied to the blades (20) and torque corresponding to the number of the blades is applied to the turbine (10), and water and the blades (20) move in the same direction to generate electricity by rotating the turbine (10), and
the drain space (45) is the same as or wider than the gap between the turbine (10) and a power generation guide (41) to make the speed and pressure of water that is discharged the same as or larger than the external flow speed and pressure so that water can be easily discharged,
wherein the upper flow guide unit (40) has a control gate (50), which increases rotational energy by increasing an angular speed of the turbine (10) by controlling the amount and flow speed of water supplied to the turbine (10) by controlling an angle through a gate rotary shaft (54), at a front thereof, and
cylinder shafts (53) connected to a gate shaft (51) at an upper front are connected to the turbine shaft (11) through gate control cylinders (52) to control the angle of the control gate (50).

2. The hydroelectric power generator of claim 1, wherein the lower flow guide unit (30) is installed on a river bottom in contact with the concrete base (60) by being connected to the height adjusters (61, 62) by using lower connection shafts (35, 35a) or is floated from a river bottom so that water flows under the lower flow guide unit(30), and the upper flow guide unit (40) is connected to the height adjuster (62) by using an upper connection shaft (44) such that a height is adjustable to generate electricity.

3. The hydroelectric power generator of claim 1, wherein the water that has passed the power generation guide (41) passes through the drain space (45) between the lower drainage (34) and the upper drainage (42) and then flows out of the power generator; and wherein the lower drainage (34) and the upper drainage (42) are formed relatively long so that water passing the blades (20) can flow straight after the stream is curved, and the flow speed and pressure of the water flowing outside through the drain space (45) are the same as or larger than those at the outside, whereby the water can easily flow outside.

4. The hydroelectric power generator of claim 1, wherein the side guides (70) are disposed at both sides of the lower flow guide unit (30) and the upper flow guide unit (40), and turbine covers (16) coupled to ends fixed shafts through fixed bushings (15) are rotatably coupled to both sides of the turbine (10) such that the turbine shaft (11) rotates through the turbine covers (16).

## Patentansprüche

1. Hydroelektrischer Stromerzeuger für einen Fluss, umfassend:
Höhenversteller (61, 62), die in einem vorbestimmten Abstand voneinander auf einem Betonsockel (60) angeordnet sind;
eine untere Strömungsführungseinheit (30), die zwischen Seitenführungen (70) angeordnet ist, deren Vorder- und Rückseite mit den Höhenverstellern (61, 62) verbunden sind, und die eine Schaufelführung (33) am vorderen Ende einer Strömungsführung (32) aufweist;
eine Turbine (10), die auf einer Turbinenwelle (11) über der unteren Strömungsführungseinheit (30) angeordnet ist und Schaufelsitze (12) an einer Außenseite davon aufweist;
Schaufeln (20), die auf festen Wellen (21), die durch die Turbine (10) verlaufen, in den Schaufelsitzen (12) angeordnet sind und durch einen Strom aufgestellt werden, um die Turbine (10) zu drehen; und
eine obere Strömungsführungseinheit (40), die zwischen den Seitenführungen (70), die mit dem Höhenversteller (62) verbunden sind, über der unteren Strömungsführungseinheit (30) angeordnet ist und eine Stromerzeugungsführung (41) aufweist, entlang derer die Schaufeln (20) an der Außenseite der Turbine (10) aufgestellt und bewegt werden,
wobei die Stromerzeugungsführung (41) so ausgebildet ist, dass sie einen vorbestimmten Spalt von der Außenseite der Turbine (10) aufweist, und Geschwindigkeitshöhen durch einen Spalt zwischen Enden der Schaufeln (20) und der Stromerzeugungsführung (41) erzeugt werden, wenn die Schaufeln (20) aufgestellt und gedreht sind, und derselbe Druck auf die Schaufeln (20) ausgeübt wird und das Drehmoment entsprechend der Anzahl der Schaufeln auf die Turbine (10) ausgeübt wird, und Wasser und die Schaufeln (20) sich in dieselbe Richtung bewegen, um Elektrizität durch Drehen der Turbine (10) zu erzeugen, und
der Ablaufraum (45) gleich oder breiter als der Spalt zwischen der Turbine (10) und einer Stromerzeugungsführung (41) ist, um die Geschwindigkeit und Druck von Wasser, das abgeleitet wird, gleich oder größer als die externe Strömungsgeschwindigkeit und Druck zu machen, so dass Wasser leicht abgeleitet werden kann,
wobei die obere Strömungsführungseinheit (40) ein Steuerschieber (50), das Rotationsenergie durch Erhöhen einer Winkelgeschwindigkeit der Turbine (10) erhöht, indem es die Menge und Strömungsgeschwindigkeit des der Turbine (10) zugeführten Wassers steuert, indem es einen Winkel durch eine Schieberdrehwelle (54) davon steuert, an einer Vorderseite aufweist, und
Zylinderwellen (53), die mit einer Schieberwelle (51) an einer oberen Vorderseite verbunden sind, mit der Turbinenwelle (11) durch Schiebersteuerzylinder (52) verbunden sind, um den Winkel des Steuerschiebers (50) zu steuern.

2. Hydroelektrischer Stromerzeuger nach Anspruch 1, wobei die untere Strömungsführungseinheit (30) auf einem Flussboden in Kontakt mit der Betonsockel (60) installiert ist, indem sie mit den Höhenverstellern (61, 62) unter Verwendung von unteren Verbindungswellen (35, 35a) verbunden ist, oder von einem Flussboden so getrieben wird, dass Wasser unter der unteren Strömungsführungseinheit (30) fließt, und die obere Strömungsführungseinheit (40) mit dem Höhenversteller (62) unter Verwendung einer oberen Verbindungswelle (44) so verbunden ist, dass eine Höhe einstellbar ist, um Elektrizität zu erzeugen.

3. Hydroelektrischer Stromerzeuger nach Anspruch 1, wobei das Wasser, das die Stromerzeugungsführung (41) passiert hat, durch den Ablaufraum (45) zwischen dem unteren Ablauf (34) und dem oberen Ablauf (42) durchläuft und dann aus dem Stromerzeuger nach außen fließt; und wobei der untere Ablauf (34) und der obere Ablauf (42) relativ lang so ausgebildet sind, dass Wasser, das die Schaufeln (20) passiert, direkt nach der Krümmung des Stroms fließen kann, und die Strömungsgeschwindigkeit und Druck des Wassers, das durch den Ablaufraum (45) nach außen fließt, gleich oder größer als die an der Außenseite sind, wodurch das Wasser leicht nach außen fließen kann.

4. Hydroelektrischer Stromerzeuger nach Anspruch 1, wobei die Seitenführungen (70) an beiden Seiten der unteren Strömungsführungseinheit (30) und der oberen Strömungsführungseinheit (40) angeordnet sind, und Turbinenabdeckungen (16), die mit Enden fester Wellen über feste Buchsen (15) gekoppelt sind, mit beiden Seiten der Turbine (10) derart drehbar gekoppelt sind, dass sich die Turbinenwelle (11) durch die Turbinenabdeckungen (16) dreht.

## Revendications

1. Générateur hydroélectrique pour une rivière, comprenant :
des ajusteurs de hauteur (61, 62) disposés à une distance prédéterminée l'un de l'autre sur un socle de béton (60) ;
une unité de guide de flux inférieure (30) disposée entre des guides latéraux (70) dont un avant et un arrière sont raccordés aux ajusteurs de hauteur (61, 62), et ayant un guide de pales (33) à une extrémité avant d'un guide de flux (32) ;
une turbine (10) disposée sur un arbre de turbine (11) au-dessus de l'unité de guide de flux inférieure (30) et ayant des sièges de pales (12) sur un côté extérieur de celle-ci ;
des pales (20) disposées sur des arbres fixes (21) passant à travers la turbine (10) dans les sièges de pales (12) et déployées par un courant pour faire tourner la turbine (10) ; et
une unité de guide de flux supérieure (40) disposée entre les guides latéraux (70) raccordés à l'ajusteur de hauteur (62) au-dessus de l'unité de guide de flux inférieure (30) et ayant un guide de génération d'énergie (41) le long duquel les pales (20) sur le côté extérieur de la turbine (10) sont déployées et déplacées,
dans lequel le guide de génération d'énergie (41) est formé pour avoir un espacement prédéterminé par rapport au côté extérieur de la turbine (10), et des charges dynamiques sont obtenues par un espacement entre des extrémités des pales (20) et le guide de génération d'énergie (41) lorsque les pales (20) sont déployées et tournées, et la même pression est appliquée aux pales (20) et un couple correspondant au nombre de pales est appliqué à la turbine (10), et de l'eau et les pales (20) se déplacent dans le même sens pour générer de l'électricité par la rotation de la turbine (10), et
l'espace de drain (45) a une largeur supérieure ou égale à l'espacement entre la turbine (10) et un guide de génération d'énergie (41) pour faire en sorte que la vitesse et la pression d'eau déchargée soient supérieures ou égales à la vitesse et à la pression de flux externe afin que de l'eau puisse être déchargée facilement,
dans lequel l'unité de guide de flux supérieure (40) a une vanne de commande (50) qui augmente une énergie rotationnelle par l'augmentation d'une vitesse angulaire de la turbine (10) en commandant la quantité et la vitesse de flux d'eau fournie à la turbine (10) par la commande d'un angle à travers un arbre rotatif de vanne (54) à un avant de celui-ci, et
des arbres de cylindre (53) raccordés à un arbre de vanne (51) à un avant supérieur sont raccordés à l'arbre de turbine (11) à travers des cylindres de commande de vanne (52) pour commander l'angle de la vanne de commande (50).

2. Générateur hydroélectrique selon la revendication 1, dans lequel l'unité de guide de flux inférieure (30) est installée sur un lit de rivière en contact avec le socle de béton (60) en étant raccordée aux ajusteurs de hauteur (61, 62) par l'utilisation d'arbres de raccordement inférieurs (35, 35a) ou est en flottaison au-dessus d'un lit de rivière de sorte que de l'eau s'écoule au-dessous de l'unité de guide de flux inférieure (30), et l'unité de guide de flux supérieure (40) est raccordée à l'ajusteur de hauteur (62) par l'utilisation d'un arbre de raccordement supérieur (44) de sorte qu'une hauteur soit ajustable pour générer de l'électricité.

3. Générateur hydroélectrique selon la revendication 1, dans lequel l'eau qui a passé le guide de génération d'énergie (41) traverse l'espace de drain (45) entre le drainage inférieur (34) et le drainage supérieur (42) puis s'écoule hors du générateur d'énergie ; et dans lequel le drainage inférieur (34) et le drainage supérieur (42) sont formés pour être relativement longs afin que de l'eau passant par les pales (20) puisse s'écouler tout droit après que le courant est incurvé, et la vitesse de flux et la pression de l'eau s'écoulant à l'extérieur à travers l'espace de drain (45) sont supérieures ou égales à celles à l'extérieur, de telle manière que l'eau puisse s'écouler facilement à l'extérieur.

4. Générateur hydroélectrique selon la revendication 1, dans lequel les guides latéraux (70) sont disposés des deux côtés de l'unité de guide de flux inférieure (30) et de l'unité de guide de flux supérieure (40), et des couvercles de turbine (16) couplés à des arbres fixes d'extrémités à travers des bagues fixes (15) sont couplés, de manière à pouvoir tourner, aux deux côtés de la turbine (10) de sorte que l'arbre de turbine (11) tourne à travers les couvercles de turbine (16).
